# EUROPEAN PATENT APPLICATION

(11) **EP 4 132 057 A1**
(43) Date of publication of application: **08.02.2023**
(21) Application number: 20929443.8
(22) Date of filing: 30.03.2020
(51) Int. Cl.: H04W 16/28

(54) **TERMINAL**

(71) Applicant: NTT DOCOMO, INC., Chiyoda-Ku Tokyo 100-6150 (JP)
(72) Inventor: KUMAGAI Shinya, Tokyo 100-6150 (JP); MATSUMURA Yuki, Tokyo 100-6150 (JP); HARADA Hiroki, Tokyo 100-6150 (JP); YOSHIOKA Shohei, Tokyo 100-6150 (JP); NAGATA Satoshi, Tokyo 100-6150 (JP)
(74) Representative: Hoffmann Eitle
(86) International application number: PCT/JP2020/014655
(87) International publication number: WO 2021/199200

(57) **Abstract**

A terminal receives a network and a tracking reference signal via a component carrier transmitted from the network. The terminal does not assume a quasi-colocation relationship between the synchronization signal block and the tracking reference signal in a case of using a different frequency band that is different from a frequency band including one or a plurality of frequency ranges.

## Description

### Technical Field

The present disclosure relates to a terminal that supports a high frequency band.

### Background Art

The 3rd Generation Partnership Project (3GPP) specifies the 5th generation mobile communication system (5G) (which is also called New Radio (NR) or Next Generation (NG)), and specification of the next generation called Beyond 5G, 5G Evolution, or 6G has been conducted.

In Release 15 and Release 16 (NR) of 3GPP, an operation in a plurality of frequency ranges, specifically, a band including FR1 (410 MHz to 7.125 GHz) and FR2 (24.25 GHz to 52.6 GHz) is specified.

Further, the NR that supports a frequency band beyond 52.6 GHz and up to 71 GHz is also under study (Non Patent Literature 1). Furthermore, Beyond 5G, 5G Evolution, or 6G (Release-18 or later) aims to support a frequency band beyond 71 GHz.

### Citation List

### Non Patent Literature

Non Patent Literature 1: "New WID on Extending current NR operation to 71 GHz", RP-193229, 3GPP TSG RAN Meeting #86, 3GPP, December 2019

### Summary of Invention

In a case of using a different frequency band that is different from FR1/FR2, such as a high frequency band beyond 52.6 GHz as described above, it is assumed to form a narrower beam by using a massive antenna including a large number of small antenna elements and to increase the number of beams to cope with a wide bandwidth and large propagation loss.

In Release 15 and Release 16 of 3GPP, the number of SS/PBCH blocks (SSBs) each configured with a synchronization signal (SS) and a downlink physical broadcast channel (PBCH) is 64 at the maximum, and the SSBs can be associated with different beams.

However, when more component carriers (CC) are configured to cover a wide bandwidth, it is necessary to assume a quasi-colocation relationship between an SSB transmitted via the CC and a tracking reference signal (TRS). Therefore, there is a concern that it is not possible to transmit a sufficient number of beams due to an insufficient number of SSBs. As a result, degeneration of cell coverage can be a problem especially when a high frequency band (wide bandwidth) is used.

In this regard, the following disclosure has been made in view of such a situation, and an object of the following disclosure is to provide a terminal that assumes beam operation which enables realization of sufficient cell coverage even in a case of using a different frequency band such as a high frequency band beyond 52.6 GHz.

An aspect of the present disclosure is a terminal (UE 200) including: a receiving unit (control signal/reference signal processing unit 240) that receives at least one of a synchronization signal block or a tracking reference signal via a component carrier transmitted from a network; and a control unit (control unit 270) that does not assume a quasi-colocation relationship between the synchronization signal block and the tracking reference signal in a case of using a different frequency band that is different from a frequency band including one or a plurality of frequency ranges.

An aspect of the present disclosure is a terminal (UE 200) including: a receiving unit (control signal/reference signal processing unit 240) that receives a synchronization signal block from a network; and a control unit (control unit 270) that assumes, in a case of using a different frequency band that is different from a frequency band including one or a plurality frequency ranges, a larger number of the synchronization signal blocks as compared with a case of using the frequency band, wherein the receiving unit receives the synchronization signal block transmitted via only some component carriers in the different frequency band.

An aspect of the present disclosure is a terminal (UE 200) including: a receiving unit (control signal/reference signal processing unit 240) that receives a synchronization signal block from a network; and a control unit (control unit 270) that assumes, in a case where the synchronization signal block is transmitted via only some component carriers in a different frequency band that is different from a frequency band including one or a plurality of frequency ranges, transmission of the synchronization signal block with power higher than maximum power in a case of using the frequency band.

### Brief Description of Drawings

Fig. 1 is an overall schematic configuration diagram of a radio communication system 10.
Fig. 2 is a diagram illustrating frequency ranges used in the radio communication system 10.
Fig. 3 is a diagram illustrating a configuration example of a radio frame, a subframe, and a slot used in the radio communication system 10.
Fig. 4 is a functional block configuration diagram of UE 200.
Fig. 5 is a diagram illustrating an example of quasi-colocation in a case where only a secondary cell (SCell) is configured and operated in a high frequency band such as FR2x.
Fig. 6 is a diagram illustrating an example of QCL between a plurality of CCs according to Operation Example 1-1.
Fig. 7 is a diagram illustrating an example of QCL between a plurality of CCs according to Operation Example 1-2.
Fig. 8 is a diagram illustrating an example of QCL between a plurality of CCs according to Operation Example 1-3.
Fig. 9 is a diagram illustrating an example of QCL between a plurality of CCs according to Operation Example 1-4.
Fig. 10 is a diagram illustrating an example of QCL between a plurality of CCs according to Operation Example 2.
Fig. 11 is a diagram illustrating an example of a communication sequence related to a random access (RA) procedure according to Operation Example 2.
Fig. 12 is a diagram illustrating an example of QCL between a plurality of CCs according to Operation Example 3.
Fig. 13 is a diagram illustrating an example of a hardware configuration of the UE 200.

### Description of Embodiments

Hereinafter, embodiments will be described with reference to the drawings. Note that the same functions or configurations are denoted by the same or similar reference numerals, and description thereof is omitted as appropriate.

### (1) Overall Schematic Configuration of Radio Communication System

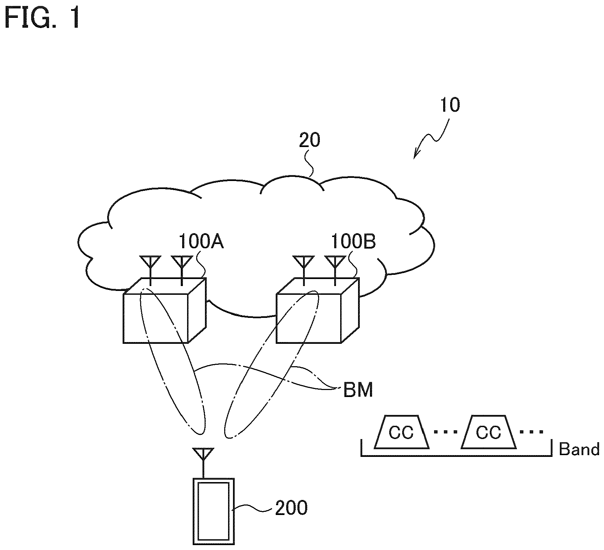

Fig. 1 is an overall schematic configuration diagram of a radio communication system 10 according to the present embodiment. The radio communication system 10 is a radio communication system according to 5G new radio (NR), and includes a Next Generation-Radio Access Network 20 (hereinafter, referred to as NG-RAN 20) and a terminal 200 (hereinafter, referred to as user equipment (UE) 200).

Note that the radio communication system 10 may also be a radio communication system according to a system called Beyond 5G, 5G Evolution, or 6G.

The NG-RAN 20 includes a radio base station 100A (hereinafter, referred to as gNB 100A) and a radio base station 100B (hereinafter, referred to as gNB 100B). Note that a specific configuration of the radio communication system 10 is not limited to the example illustrated in Fig. 1, the specific configuration including the number of gNBs and the number of UEs.

The NG-RAN 20 includes a plurality of NG-RAN nodes, specifically, gNBs (or ng-eNBs) in an actual implementation, and is connected to a core network (5GC) (not illustrated) according to 5G. Note that the NG-RAN 20 and the 5GC may be simply referred to as a network.

Each of the gNB 100A and the gNB 100B is a radio base station according to 5G, and performs radio communication with the UE 200 according to 5G. The gNB 100A, the gNB 100B, and the UE 200 can support massive Multiple-Input Multiple-Output (MIMO) in which a beam BM (which may also be referred to as an antenna beam) with higher directivity is formed, carrier aggregation (CA) in which a plurality of component carriers (CC) are used in bundles, dual connectivity (DC) in which communication is performed between the UE and each of two NG-RAN nodes at the same time, and the like by controlling a radio signal transmitted from a plurality of antenna elements.

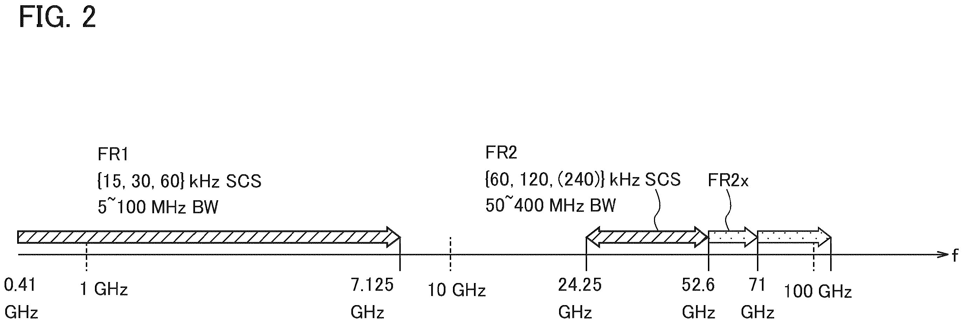

Further, the radio communication system 10 supports a plurality of frequency ranges (FR). Fig. 2 illustrates frequency ranges used in the radio communication system 10.

As illustrated in Fig. 2, the radio communication system 10 supports FR1 and FR2. A frequency band of each FR is as follows.

- FR1: 410 MHz to 7.125 GHz
- FR2: 24.25 GHz to 52.6 GHz

In FR1, a subcarrier spacing (SCS) of 15 kHz, 30 kHz, or 60 kHz may be used, and a bandwidth (BW) of 5 to 100 MHz may be used. FR2 is a higher frequency range than FR1, and in FR2, an SCS of 60 kHz or 120 kHz (240 kHz may be included) may be used, and a bandwidth (BW) of 50 to 400 MHz may be used.

Note that the SCS may be interpreted as numerology. The numerology is defined in 3GPP TS38.300 and corresponds to one subcarrier spacing in frequency domain.

Furthermore, the radio communication system 10 also supports a higher frequency band than the frequency band of FR2. Specifically, the radio communication system 10 supports a frequency band beyond 52.6 GHz and up to 71 GHz. Here, such a high frequency band is referred to as "FR2x" for convenience.

In the present embodiment, FR2x is different from the frequency band including FR1 and FR2, and may be referred to as a different frequency band. Further, a frequency band between FR1 and FR2 may also be called a different frequency band.

In a case of using a high frequency band beyond 52.6GHz, Cyclic Prefix-Orthogonal Frequency Division Multiplexing (CP-OFDM)/Discrete Fourier Transform-Spread (DFT-S-OFDM) with a larger subcarrier spacing (SCS) may be applied.

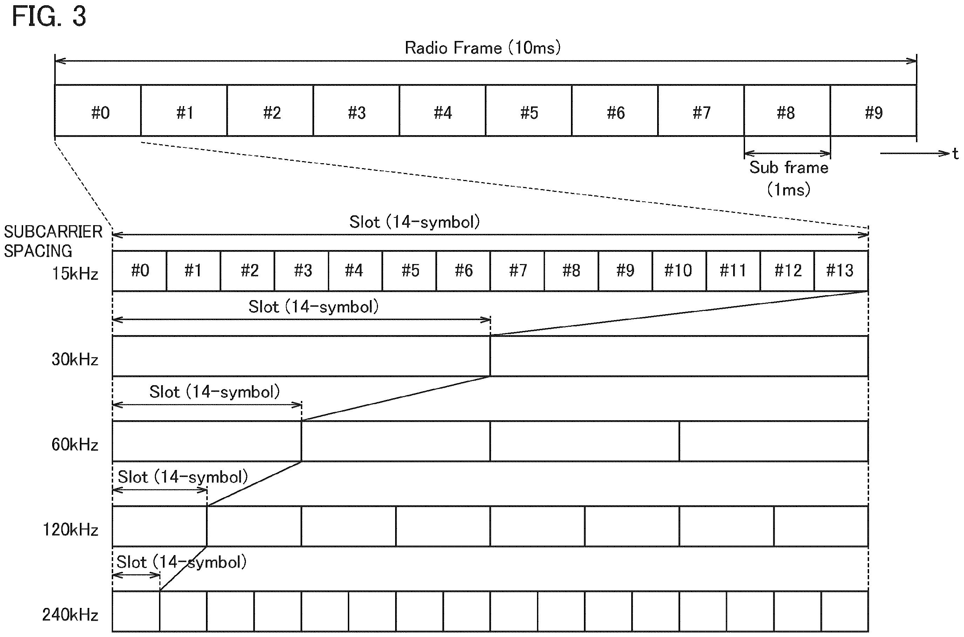

Fig. 3 illustrates a configuration example of a radio frame, a subframe, and a slot used in the radio communication system 10.

As illustrated in Fig. 3, one slot is configured with 14 symbols, and the larger (wider) the SCS, the shorter the symbol duration (and the slot duration). The SCS is not limited to spacings (frequencies) illustrated in Fig. 3. For example, 480 kHz, 960 kHz, or the like may be used.

Further, the number of symbols configuring one slot does not necessarily have to be 14 (for example, 28 or 56). Further, the number of slots per subframe may vary depending on the SCS.

Note that a time direction (t) illustrated in Fig. 3 may also be referred to as time domain, a symbol duration, a symbol time, or the like. Further, a frequency direction may also be referred to as frequency domain, a resource block, a subcarrier, a bandwidth part (BWP), or the like.

The BWP may be interpreted as a contiguous set of physical resource blocks (PRBs) selected from a contiguous subset of common resource blocks for a given numerology on a given carrier.

BWP information (bandwidth, frequency position, and subcarrier spacing (SCS)) that the UE 200 needs to use for radio communication can be configured for the UE 200 by using higher layer signaling (for example, radio resource control layer (RRC) signaling). A different BWP may be configured for each UE 200 (terminal). The BWP may be changed by higher layer signaling or lower layer signaling, specifically, physical layer (L1) signaling (such as downlink control information (DCI) to be described later).

In the radio communication system 10, multiple CCs for the CA may be supported to achieve higher throughput. For example, in a case where a maximum CC bandwidth is 400 MHz, up to 32 CCs can be arranged in FR2x, specifically, a frequency band of 57 GHz to 71 GHz. Note that the maximum number of configured CCs may exceed 32 or may be less than 32.

Further, in the radio communication system 10, a synchronization signal block (SSB) is transmitted from the network, specifically, the gNB 100A (or the gNB 100B, hereinafter the same applies), to a cell formed by the gNB 100A. The SSB is a block of synchronization signal/broadcast channel configured with a synchronization signal (SS) and a physical broadcast channel (PBCH).

The SSB is mainly transmitted from the network periodically so that the UE 200 can detect a cell ID or a reception timing when the communication starts. In the NR, the SSB is also used for reception quality measurement of each cell. An SSB transmission period (periodicity) may be specified as, for example, 5, 10, 20, 40, 80, or 160 milliseconds. Note that the UE 200 in an initial access may be assumed to have a transmission period of 20 milliseconds.

The network (NG-RAN 20) can notify the UE 200 of an actually transmitted SSB index indication (ssb-PositionsInBurst) by system information (SIB1) or radio resource control layer (RRC) signaling.

Further, when supporting FR2x (high frequency band) or the like, in order to cope with a wide bandwidth and a large propagation loss, it is necessary to form a narrower beam by using a massive antenna including a large number of antenna elements. That is, multiple beams are required to cover a certain geographical area.

In 3GPP Release 15 (FR2), a maximum number of beams used for SSB transmission is 64, but the maximum number of beams may be increased to cover a certain geographical area with a narrow beam. In this case, the number of SSBs is larger than 64, and thus an index (SSB index) for identifying the SSB may have a value after #64.

The SS is configured with a primary synchronization signal (PSS) and a secondary synchronization signal (secondary SS (SSS)).

The PSS is a known signal that the UE 200 first attempts to detect in a cell search procedure. The SSS is a known signal transmitted to detect a physical cell ID in the cell search procedure.

The PBCH includes information required for the UE 200 to establish frame synchronization with an NR cell formed by the gNB 100A after detecting the SS/PBCH block, such as a system frame number (SFN) and indexes for identifying symbol positions of a plurality of SS/PBCH blocks in a half frame (5 milliseconds).

Further, the PBCH can also include a system parameter required to receive system information (SIB). Further, the SSB also includes a broadcast channel demodulation reference signal (DMRS for PBCH). The DMRS for PBCH is a known signal transmitted to measure a radio channel state for PBCH demodulation.

When the SSB is different, specifically, SSBs (which may also be interpreted as a beam BM used for SSB transmission) with different SSB indexes may be interpreted as having different quasi-colocation (QCL) assumptions.

As for the QCL, in a case where properties of a channel carrying a symbol on one antenna port can be inferred from a channel carrying a symbol on another antenna port, the two antenna ports may be interpreted as being quasi co-located.

In other words, it can be interpreted that SSBs with the same SSB index are assumed to be QCLed, and other SSBs (that is, SSBs with different SSB indexes) should not be assumed to be QCLed. Note that the QCL may be called semi-colocation.

For example, the fact that a physical downlink control channel (PDCCH) transmitted from the gNB 100A is quasi-colocated (QCLed) with an SSB can be interpreted as that the PDCCH passes the same channel state (channel condition) as the SSB. Therefore, channel estimation information for detecting the SSB is also useful for detecting the PDCCH.

Here, the channel state may be defined by the following parameters.

- Doppler shift
- Doppler spread
- Average delay
- Delay spread
- Spatial Rx parameter

Further, a QCL type may be specified using such parameters. Specifically, the QCL type is specified as follows in clause 5.1.5 of 3GPP TS38.214.

- QCL-TypeA: {Doppler shift, Doppler spread, average delay, delay spread}
- QCL-TypeB: {Doppler shift, Doppler spread}
- QCL-TypeC: {Doppler shift, average delay}
- QCL-TypeD: {Spatial Rx parameter}

Further, in the radio communication system 10, some new reference signals may be applied. For example, a phase tracking reference signal (PTRS) and a tracking reference signal (TRS) may be applied.

The PTRS is a terminal-specific reference signal for the purpose of estimating phase noise, which is a problem in high frequency bands.

The TRS is a reference signal used for time and/or frequency synchronization (tracking). Information on the TRS is specified as trs-Info in 3GPP TS38.331. trs-Info can indicate that antenna ports for all non-zero power (NZP)-CSI-RS resources in a channel state information-reference signal (CSI-RS) resource set are the same. In a case where a trs-Info field is not present in a radio resource control layer (RRC) message, or is released, the UE 200 may apply a value false.

### (2) Functional Block Configuration of Radio Communication System

Next, a functional block configuration of the radio communication system 10 will be described. Specifically, a functional block configuration of the UE 200 will be described.

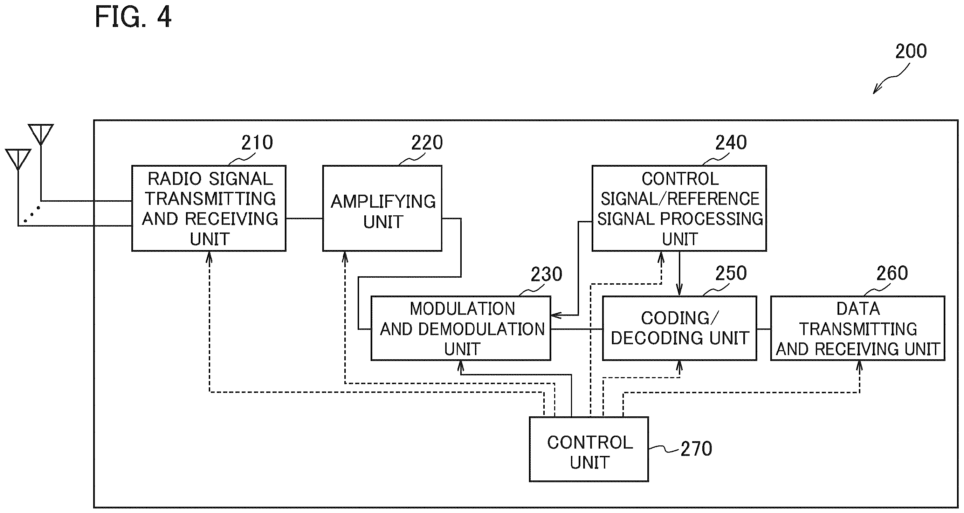

Fig. 4 is a functional block configuration diagram of the UE 200. As illustrated in Fig. 4, the UE 200 includes a radio signal transmitting and receiving unit 210, an amplifying unit 220, a modulation and demodulation unit 230, a control signal/reference signal processing unit 240, a coding/decoding unit 250, a data transmitting and receiving unit 260, and a control unit 270.

The radio signal transmitting and receiving unit 210 transmits and receives a radio signal according to the NR. The radio signal transmitting and receiving unit 210 supports the massive MIMO, the CA in which a plurality of CCs are used in bundles, the DC in which communication is performed between the UE and each of two NG-RAN nodes at the same time, and the like.

The amplifying unit 220 is implemented by a power amplifier (PA)/low noise amplifier (LNA) or the like. The amplifying unit 220 amplifies a signal output from the modulation and demodulation unit 230 to a predetermined power level. Further, the amplifying unit 220 amplifies an RF signal output from the radio signal transmitting and receiving unit 210.

The modulation and demodulation unit 230 performs data modulation/demodulation, transmission power setting, resource block allocation, and the like, for each predetermined communication destination (the gNB 100A or another gNB). In the modulation and demodulation unit 230, Cyclic Prefix-Orthogonal Frequency Division Multiplexing (CP-OFDM)/Discrete Fourier Transform-Spread (DFT-S-OFDM) may be applied. Further, the DFT-S-OFDM may be used not only in uplink (UL) but also in downlink (DL) .

The control signal/reference signal processing unit 240 performs processing related to various control signals transmitted and received by the UE 200 and processing related to various reference signals transmitted and received by the UE 200.

Specifically, the control signal/reference signal processing unit 240 receives various control signals transmitted from the gNB 100A via a predetermined control channel, for example, a control signal of the radio resource control layer (RRC). Further, the control signal/reference signal processing unit 240 transmits various control signals to the gNB 100A via a predetermined control channel.

The control signal/reference signal processing unit 240 performs processing using a reference signal (RS) such as a demodulation reference signal (DMRS) and a phase tracking reference signal (PTRS).

The DMRS is a known terminal-specific reference signal (pilot signal) (base station-terminal) for estimation of a fading channel used for data demodulation. The PTRS is a terminal-specific reference signal for estimation of phase noise, which is a problem in high frequency bands as described above.

Note that, in addition to the DMRS and the PTRS, the reference signal may also include a sounding reference signal (SRS), a positioning reference signal (PRS) for location information, a channel state information-reference signal (CSI-RS), a tracking reference signal (TRS), and the like.

Further, the channels include a control channel and a data channel. Examples of the control channel include a physical downlink control channel (PDCCH), a physical uplink control channel (PDCCH), a random access channel (RACH), downlink control information (DCI) including a random access radio network temporary identifier (RA-RNTI), and a physical broadcast channel (PBCH).

Examples of the data channel include a physical downlink shared channel (PDSCH) and a physical uplink shared channel (PUSCH). Data means data transmitted via the data channel. The data channel may be read as a shared channel.

In the present embodiment, the control signal/reference signal processing unit 240 can receive the synchronization signal block (SSB) from the network. In the present embodiment, the control signal/reference signal processing unit 240 is configured.

Specifically, the control signal/reference signal processing unit 240 can receive the SSB via the component carrier (CC) transmitted from the network (the gNB 100A or another gNB).

Further, the control signal/reference signal processing unit 240 can also receive at least one of the SSB or the TRS (tracking reference signal) via the CC.

As described above, the TRS specifically corresponds to trs-Info. trs-Info can be included in NZP-CSI-RS-ResourceSet which is an information element (IE) of a higher layer (RRC), for example.

The control signal/reference signal processing unit 240 can receive the SSB transmitted via only some CCs in the different frequency band including a high frequency band such as FR2x. That is, in a case of using FR2x or the like, the network may transmit the SSB via only some CCs instead of all CCs transmitted in the frequency band. As a result, the number of required SSBs (the number of beams BM) can be suppressed.

In particular, in a high frequency band such as FR2x, in a case where only a secondary cell (SCell) is configured, and a primary cell (PCell) and a primary secondary cell (PSCell) is not configured, the SSB may be transmitted via only some CCs.

Further, the control signal/reference signal processing unit 240 can receive downlink control information (DCI) including information indicating a reference signal (CSI-RS) resource for estimation of channel state information used for determining a random access channel (RACH) occasion (RO).

The DCI for the random access (RA) procedure can include an index of a random access preamble, an indicator of uplink (UL)/supplementary uplink (SUL), and the like, and in the present embodiment, an indicator of the CSI-RS resource may be further included.

The coding/decoding unit 250 performs data division/concatenation, channel coding/decoding, and the like for each predetermined communication destination (the gNB 100A or another gNB).

Specifically, the coding/decoding unit 250 divides data output from the data transmitting and receiving unit 260 into pieces of data each having a predetermined size, and performs channel coding on the data obtained by the division. Further, the coding/decoding unit 250 decodes data output from the modulation and demodulation unit 230 and concatenates the decoded data.

The data transmitting and receiving unit 260 performs transmission and reception of a protocol data unit (PDU) and a service data unit (SDU). Specifically, the data transmitting and receiving unit 260 performs assembly, disassembly, and the like of the PDU/SDU in a plurality of layers (a medium access control layer (MAC), a radio link control layer (RLC), a packet data convergence protocol layer (PDCP), and the like). Further, the data transmitting and receiving unit 260 performs data error correction and retransmission control based on a hybrid automatic repeat request (hybrid ARQ).

The control unit 270 controls each functional block included in the UE 200. Particularly, in the present embodiment, the control unit 270 performs a control related to the synchronization signal block (SSB).

Specifically, in a case of the different frequency band including a high frequency band such as FR2x, the control unit 270 does not have to assume a quasi-colocation (QCL) relationship between the SSB and the TRS.

More specifically, in a case of receiving the SSB and the TRS (which may also be interpreted as trs-Info) via the component carrier (CC) in a high frequency band such as FR2x, the control unit 270 does not have to assume that the SSB and the TRS are QCLed. Note that the definition of QCL is as described above.

Conversely, in a case of a frequency band (FR1, FR2 and the like) other than the high frequency band such as FR2x, it may be assumed that the SSB and the TRS are QCLed according to trs-Info.

The control unit 270 may assume a QCL relationship between the TRS received together with the SSB and another TRS based on the another TRS (that is, the TRS of another CC) received via a predetermined CC. Specifically, the control unit 270 may assume that the TRS received together with the SSB and the another TRS are QCLed.

Note that the assumption of the QCL relationship as described above may be applied only to the secondary cell (SCell) that uses the different frequency band including a high frequency band such as FR2x. That is, in a high frequency band such as FR2x, only the SCell may be configured and the PCell and the PSCell do not have to be configured.

In such a case, the control unit 270 may assume a QCL relationship for SCells using the different frequency band.

Further, as described above, in the radio communication system 10, more than 64 SSBs (beams BM) can be used. Especially, in a high frequency band such as FR2x, such a state is assumed.

Therefore, in a case of the different frequency band that is different from the frequency bands such as FR1 and FR2, the control unit 270 may assume a larger number of SSBs than in a case of the frequency bands.

Note that the network may notify the UE 200 of the assumed number of SSBs (for example, 256) by DCI and/or higher layer signaling (such as RRC).

Alternatively, in a case where the SSB is transmitted via only some CCs in the different frequency band that is different from the frequency bands such as FR1 and FR2, the control unit 270 may assume transmission of the SSB with power higher than maximum power in the frequency bands.

Specifically, in a case where the SSB is transmitted via only some CCs using a high frequency band such as FR2x, the control unit 270 may assume transmission of the SSB with energy per resource element (EPRE) higher than EPRE in a case of using FR1 and FR2. For example, in a case where maximum EPRE of the SSB in a case of using FR1 and FR2 is 50 dBm, it may be assumed that maximum EPRE of the SSB transmitted via only some CCs using a high frequency band such as FR2x is 56 dBm.

### (3) Operations of Radio Communication System

Next, operations of the radio communication system 10 will be described. Specifically, an operation related to an antenna beam (beam BM) in a high frequency band such as FR2x will be described. Specifically, an operation related to processing of the synchronization signal block (SSB) of the UE 200 in a case of using a high frequency band such as FR2x will be described.

### (3.1) Assumption

As described above, the radio communication system 10 supports a frequency band (FR2x) beyond 52.6 GHz and up to 71 GHz. The high frequency band like FR2x is essentially different from FR1 and FR2 in the following points.

### (Channel/Radio Wave Propagation)

- Expansion of available bandwidth (approximately 13 GHz (for 57 to 71 GHz unlicensed band))
- Low delay spread resulting from high path-loss due to non-line of sight (NLOS)

### (Device (Terminal))

- Small antenna element according to wavelength (which constitutes massive antenna)
- High directivity (narrow beam width) based on analog beamforming
- Decrease in efficiency of power amplifier (increase in peak-to-average power ratio (PAPR))
- Increase in phase noise (applicability of larger SCS and shorter symbol time)

Further, the wider the available bandwidth, the more likely it is that more CCs are configured, unless a very wide CC bandwidth is supported. As described above, in a case where the maximum CC bandwidth is 400 MHz as in FR2, a maximum of 32 CCs can be arranged in the frequency band of 57 GHz to 71 GHz.

In addition, it is assumed to form a narrower beam by using a massive antenna including a large number of small antenna elements and to increase the number of beams to cope with a wide bandwidth and large propagation loss.

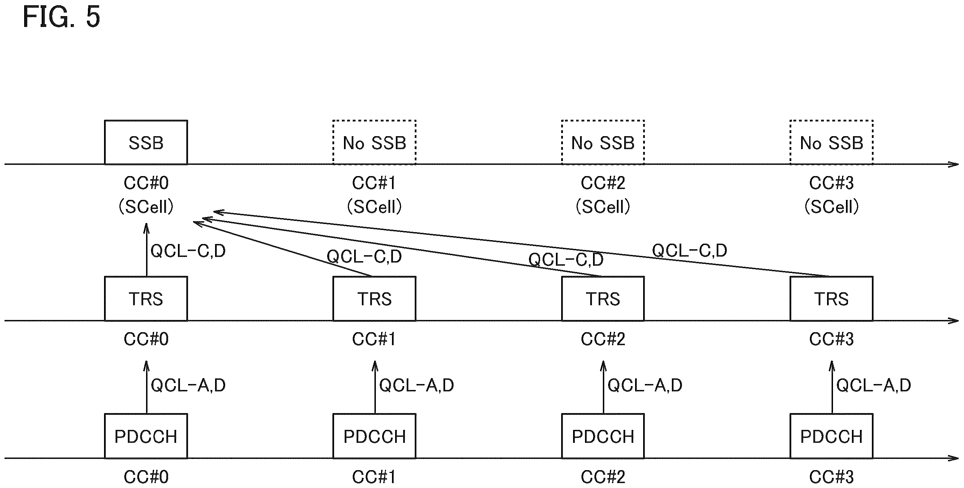

Fig. 5 illustrates an example of quasi-colocation in a case where only the secondary cell (SCell) is configured and operated in a high frequency band such as FR2x.

Specifically, Fig. 5 illustrates an example of QCL (Transmission Configuration Indication (TCI) state) between a plurality of CCs. Here, it may be assumed that a narrower beam BM is used to cope with a wide bandwidth and large propagation loss.

In a case of using a high frequency band such as FR2x, as illustrated on the upper side of Fig. 5, the SSB is transmitted via only some CCs, specifically, CC#0. By doing so, it is possible to reduce an SSB overhead while coping with a wide bandwidth.

Further, as illustrated on the middle side of Fig. 5, in a case where the QCL type includes C and D, it is possible to assume QCL that spans cells (SCells), that is, QCL that spans CCs to configure a channel or the like. In this case, as described above, QCL between cells (between CCs) may be assumed by using the TRS (trs-Info). Specifically, a QCL relationship between the SSB of CC#0 and the TRS of each of other CCs (CC#1, CC#2, and CC#3) may be assumed.

On the other hand, as illustrated on the lower side of Fig. 5, in a case where the QCL type includes A, it is not possible to assume the QCL that spans cells (SCells) to configure a channel or the like. Therefore, a QCL relationship between a PDCCH and a TRS is assumed in a corresponding CC. The QCL type is specified in clause 5.1.5 of 3GPP TS38.214, as described above. Note that the QCL type can be set to any one of A, B, or C, and D in addition to A, B, or C.

In 3GPP Release-15 and 16, the maximum number of SSBs is 64, and the maximum number of beams BM can be 64. Therefore, there is a concern that it is not possible to transmit a sufficient number of beams due to an insufficient number of SSBs transmitted via the CC. As a result, degeneration of cell coverage can be a problem especially when a high frequency band such as FR2x, that is, a wide bandwidth is used.

In the following, an operation related to beam BM operation which prevents such degeneration of cell coverage and enables realization of sufficient cell coverage even in a case of using a high frequency band such as FR2x will be described.

### (3.2) Overview of Operation

Next, operation examples based on an operation in a high frequency band such as FR2x will be mainly described. Specifically, the following operation examples will be described.
- (Operation Example 1): Supporting configuration of TRS that is not QCLed with SSB

In this case, notification of a QCL relationship between a TRS that is not QCLed with the SSB and a TRS transmitted via a predetermined CC may be made by referring to the TRS transmitted via the predetermined CC.

In addition, in a high frequency band such as FR2x, a CC used to transmit the SSB does not have to exist. Specifically, in the high frequency band, a CC used to transmit the SSB does not have to exist at all, or the SSB may be transmitted via only some CCs.

Furthermore, in this operation example, the UE 200 does not have to assume time/frequency synchronization using the SSB transmitted in the PCell and/or PSCell.
- (Operation Example 2): Supporting more than 64 SSBs

In this case, the SSB may be transmitted via only some CCs in the high frequency band. Moreover, for a QCL source, the SSB may be configured in (associated with) the TRS transmitted via each CC.
- (Operation Example 3): Supporting setting of energy per resource element (EPRE) for SSB, EPRE exceeding 50 dBm.

Here, it may be assumed that the SSB is transmitted using a wider beam BM radiated as compared with other signals including the TRS and that other signals including the TRS are transmitted using a narrow beam BM.

Further, in this case, similarly to Operation Example 2, in the high frequency band, the SSB may be transmitted via only some CCs, and, for the QCL source, the SSB may be configured in (associated with) the TRS transmitted via each CC.

In addition, as a content common to Operation Examples 1 to 3, an upper limit of the number of configurable resources for the TRS (CSI-RS) may be different from that of FR1 and/or FR2.

### (3.3) Operation Example 1

Hereinafter, a specific example of Operation Example 1 described above will be described. In Operation Example 1, as described above, in a case of receiving the SSB and the TRS (trs-Info) via one or a plurality of component carriers (CC) in a high frequency band such as FR2x, it is not assumed that the SSB and the TRS are QCLed.

### (3.3.1) Operation Example 1-1

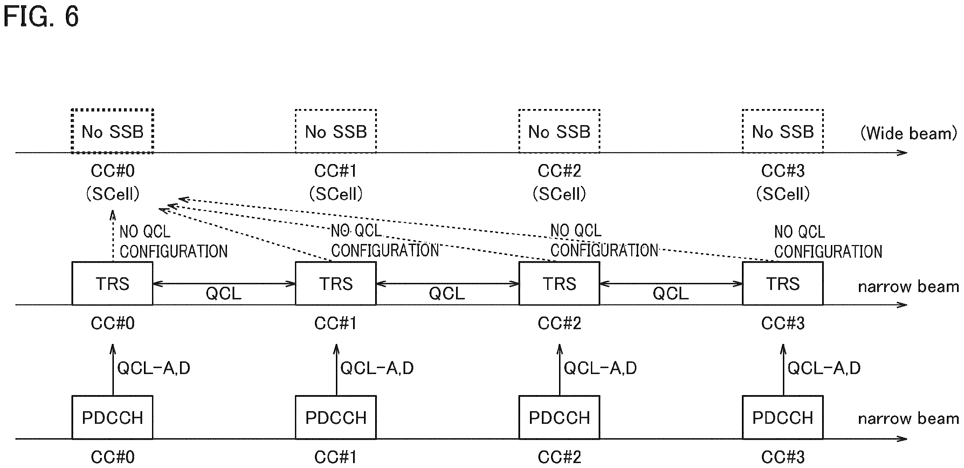

Fig. 6 illustrates an example of QCL between a plurality of CCs according to Operation Example 1-1. Similarly to Fig. 5, it is also assumed in Fig. 6 that only the secondary cell (SCell) is configured and operated in a high frequency band such as FR2x.

As described above, in this operation example, the CC used to transmit the SSB does not have to exist in the same frequency band such as FR2x. Note that the same frequency band may also be called the same band or the same frequency range. Further, the same frequency band may be limited to a part of the frequency band. In the following, the expression "the same band" is used.

The UE 200 does not have to assume time/frequency synchronization using the SSB transmitted in the PCell and/or PSCell in a case where notification (for example, higher layer signaling) of the configuration of the TRS that is not QCLed with the SSB is made.

As illustrated in Fig. 6, the UE 200 may assume that a TRS transmitted on the same symbol or slot via CCs (CC#0 and CC#1, CC#1 and CC#2, or CC#2 and CC#3) in the same band is QCLed for at least one of the following.
- QCL-TypeA: {Doppler shift, Doppler spread, average delay, delay spread}
- QCL-TypeC: {Doppler shift, average delay}
- QCL-TypeD: {Spatial Rx parameter}

Further, transmission of the TRS may be performed aperiodically, semi-persistently, or periodically. Alternatively, the transmission of the TRS may be limited to the periodic transmission.

Note that, as illustrated in Fig. 6, originally, the SSB may be transmitted using a wider beam BM as compared with the TRS and the PDCCH, but in this operation example, the SSB does not have to be transmitted.

### (3.3.2) Operation Example 1-2

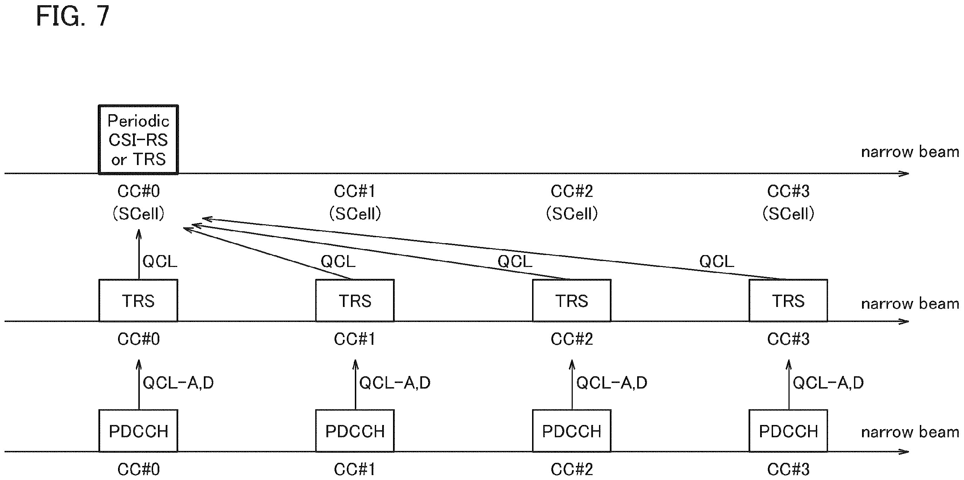

Fig. 7 illustrates an example of QCL between a plurality of CCs according to Operation Example 1-2. Similarly to Fig. 5, it is also assumed in Fig. 7 that only the SCell is configured and operated in a high frequency band such as FR2x. Hereinafter, a part different from Operation Example 1-1 will be mainly described.

As illustrated in Fig. 7, the UE 200 may assume that a CSI-RS or TRS transmitted periodically via at least one CC in the same band is configured as a reference signal (RS) for the QCL source of the TRS of each of all CCs (CC#0, CC#1, CC#2, and CC#3) in the same band, for at least one of the following.
- QCL-TypeA: {Doppler shift, Doppler spread, average delay, delay spread}
- QCL-TypeC: {Doppler shift, average delay}
- QCL-TypeD: {Spatial Rx parameter}

Note that, as illustrated in Fig. 7, the CSI-RS or TRS may be transmitted by using a narrower beam BM radiated, as compared with the SSB.

### (3.3.3) Operation Example 1-3

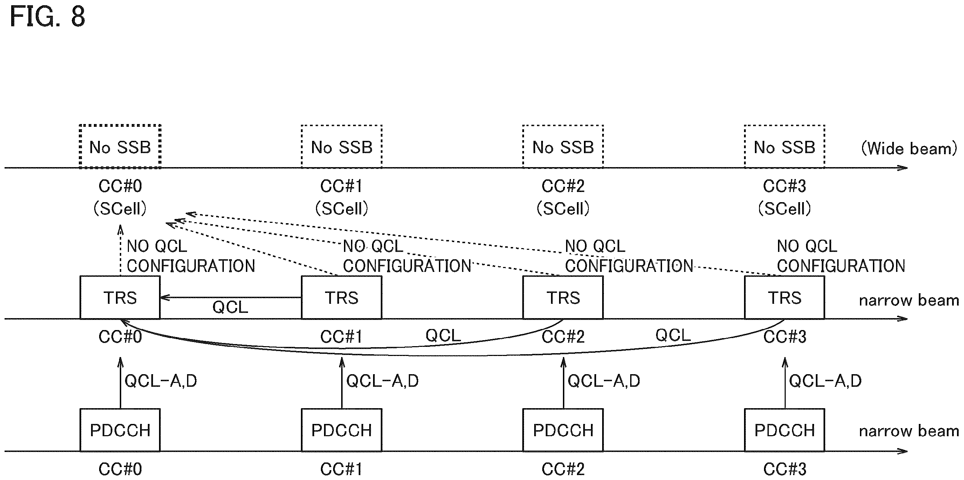

Fig. 8 illustrates an example of QCL between a plurality of CCs according to Operation Example 1-3. Similarly to Fig. 5, it is also assumed in Fig. 8 that only the SCell is configured and operated in a high frequency band such as FR2x. Hereinafter, a part different from Operation Example 1-1 will be mainly described.

As illustrated in Fig. 8, the UE 200 may configure a TRS (CSI-RS resource ID) transmitted via a specific CC in the same band as a reference signal (RS) for a QCL source of a TRS transmitted via another CC, and may assume that the TRS is QCLed for at least one of the following.
- QCL-TypeA: {Doppler shift, Doppler spread, average delay, delay spread}
- QCL-TypeC: {Doppler shift, average delay}
- QCL-TypeD: {Spatial Rx parameter}

Further, the specific CC may be configured arbitrarily or may be specified in advance. For example, the specific CC may be a CC with the lowest index or a CC to which a PUCCH of a corresponding SCell is transmitted.

### (3.3.4) Operation Example 1-4

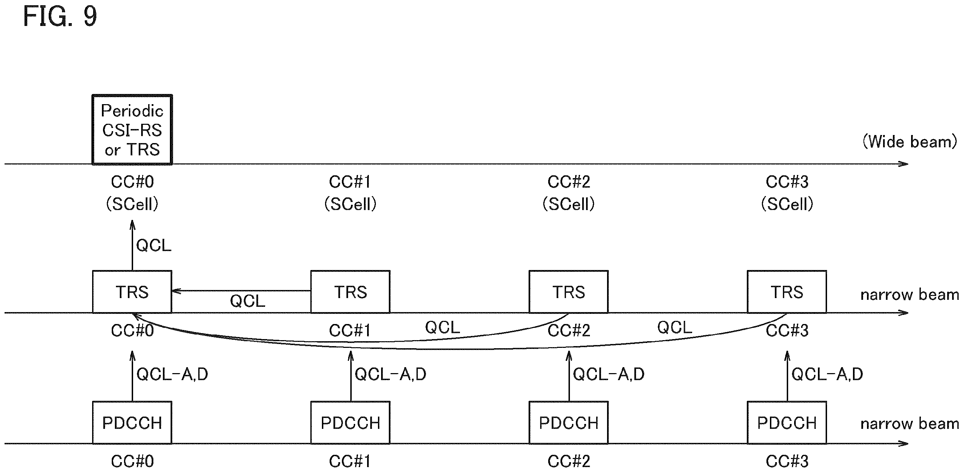

Fig. 9 illustrates an example of QCL between a plurality of CCs according to Operation Example 1-4. Similarly to Fig. 5, it is also assumed in Fig. 9 that only the SCell is configured and operated in a high frequency band such as FR2x. Hereinafter, a part different from Operation Example 1-3 will be mainly described.

As illustrated in Fig. 9, the UE 200 may assume that a CSI-RS or TRS transmitted periodically via at least one CC in the same band is configured as a reference signal (RS) for the QCL source of the TRS transmitted via each CC.

In this case, at least one CC in the same band may be limited to the specific CC described above.

### (3.3.5) Another Operation Example

In this operation example, as described above, it is assumed that only the SCell is configured and operated in a high frequency band such as FR2x. However, even in a case of the SCell, a random access channel, specifically, a physical random access channel (PRACH) needs to be transmitted for a timing advance (TA) command or the like.

In 3GPP Release-15 and 16, only contention free random access (CFRA) of a PDCCH order is supported in the SCell. In the CFRA of the PDCCH order, only the SSB can be transmitted (notified) to the UE 200 as a downlink (DL) RS associated with the RACH occasion (RO) (see clause 7.3.1.2.1 of 3GPP TS38.212).

Since the maximum number of SSBs is 64, transmission using a wide beam is assumed, and PRACH transmission assuming reception with a narrow beam cannot be performed.

Therefore, in order to solve such a problem, the UE 200 may be notified of the following parameters by DCI for a random access (RA) procedure according to the PDCCH order (that is, via the PDCCH).
- Random Access Preamble index
- UL/SUL indicator
- CSI-RS resource index: X bits may be used. This parameter (field) can indicate a CSI-RS resource used for determining an RACH occasion (RO) for random access channel (specifically, PRACH) transmission.

X of the X bits may be 6 as in the SS/PBCH index, but may be a value other than 6. X may be determined based on the following mathematical formula, for example.
- Ceiling (log₂(Z)), where Z indicates the number of CSI-RS resources.
- PRACH Mask index: Y bits may be used. This parameter (field) can indicate an RO associated with the CSI-RS resource indicated by the CSI-RS resource index for PRACH transmission.

Y of the Y bit may be 4, or may be a value other than 4. Further, a format of the DCI including these parameters may be an existing format (for example, Format 1_0) or a new format.

In a case of the existing format, the UE 200 may determine, based on at least one of the following values, that an RA procedure initiated by a PDCCH order associated with the CSI-RS is configured.
- Radio Network Temporary Identifier (RNTI)
- Frequency Domain Resource Allocation (FDRA)
- Reserved bits
- RRC parameter (which indicates whether or not the RA procedure initiated by the PDCCH order associated with the CSI-RS is configured)

Alternatively, a CC on which the RA procedure is performed may be designated by using the reserved bit included in the DCI. For example, the network may associate a bitmap of the reserved bit with a CC (or an ID of a serving cell) on which the RA procedure is performed by using higher layer signaling, and may notify the UE 200 of the CC by using the DCI.

### (3.4) Operation Example 2

Hereinafter, a specific example of Operation Example 2 described above will be described. In Operation Example 2, as described above, more than 64 SSBs are supported in a high frequency band such as FR2x.

In Operation Example 2, the SSB may be transmitted via only some CCs in the high frequency band. Moreover, for the QCL source, the SSB may be configured in the TRS transmitted via each CC.

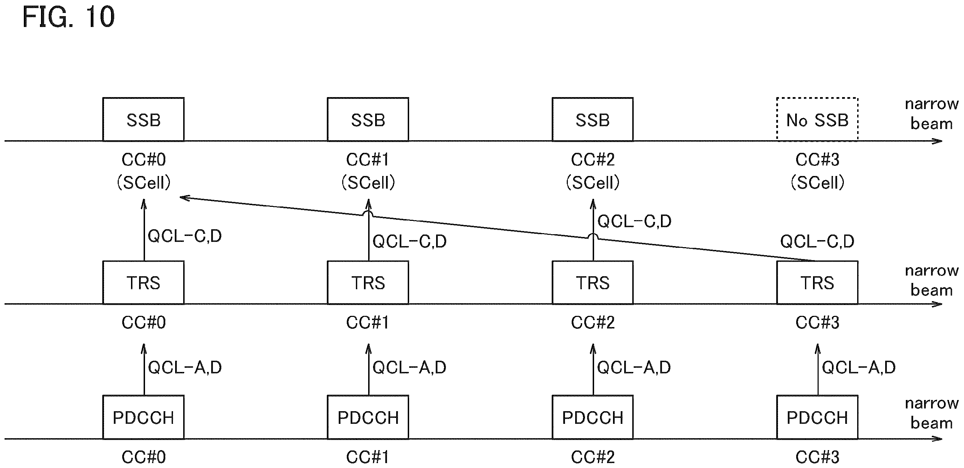

Fig. 10 illustrates an example of QCL between a plurality of CCs according to Operation Example 2. Similarly to Fig. 5, it is also assumed in Fig. 10 that only the SCell is configured and operated in a high frequency band such as FR2x.

As illustrated in Fig. 10, in this operation example, a plurality of SSBs may be transmitted while using more than 64 SSBs even in the high frequency band. As described above, in this operation example, the SSB may be transmitted via only some CCs (CC0, CC1, and CC2) of the CCs in the high frequency band.

In this operation example as well, similarly to Operation Example 1, the UE 200 may be notified of the following parameters by the DCI for the random access (RA) procedure according to the PDCCH order.
- Random Access Preamble index
- UL/SUL indicator
- SS/PBCH index: X bits may be used. This parameter (field) can indicate an SSB used for determining an RACH occasion (RO) for random access channel (specifically, PRACH) transmission.

X of the X bit may be 6, but may be a value other than 6. X may be determined based on the following mathematical formula, for example.
- Ceiling (log₂(Z)), where Z indicates the number of SSBs (> 64).
- PRACH Mask index: Y bits may be used. This parameter (field) can indicate an RO associated with the SSB indicated by the SS/PBCH index for PRACH transmission. Y of the Y bit may be 4, or may be a value other than 4.

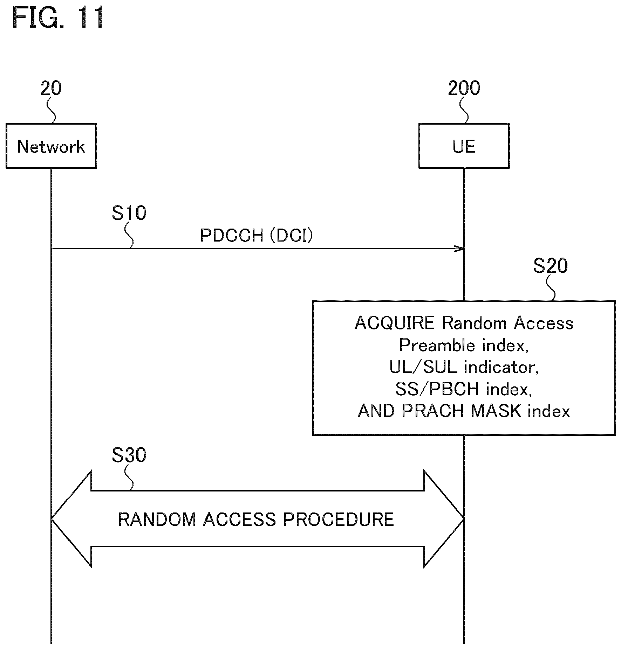

Fig. 11 illustrates an example of a communication sequence related to the random access (RA) procedure according to Operation Example 2. Note that the communication sequence of Fig. 11 may also be applied to the RA procedure according to Operation Example 1.

As illustrated in Fig. 11, the network transmits a PDCCH including DCI to the UE 200 (S10). The DCI may include the above-described parameters.

The UE 200 acquires the Random Access Preamble index, the UL/SUL indicator, the SS/PBCH index, and the PRACH Mask index included in the DCI (S20). In addition, in a case of Operation Example 1, as described above, the CSI-RS resource index may be acquired instead of the SS/PBCH index.

The network and the UE 200 use the acquired parameters to perform the RA procedure and establish connection (S30).

Further, similarly to Operation Example 1, a format of the DCI may be an existing format (for example, Format 1_0) or a new format.

In a case of the existing format, the UE 200 may determine, based on at least one of the following values, that an RA procedure initiated by a PDCCH order associated with the SSBs (> 64) is configured.
- Radio Network Temporary Identifier (RNTI)
- Frequency Domain Resource Allocation (FDRA)
- Reserved bits
- RRC parameter (which indicates whether or not the RA procedure initiated by the PDCCH order associated with the SSBs (> 64) is configured)

Alternatively, a CC on which the RA procedure is performed may be designated by using the reserved bit included in the DCI. For example, the network may associate a bitmap of the reserved bit with a CC (or an ID of a serving cell) on which the RA procedure is performed by using higher layer signaling, and may notify the UE 200 of the CC by using the DCI (similarly to Operation Example 1).

### (3.5) Operation Example 3

Hereinafter, a specific example of Operation Example 3 described above will be described. In Operation Example 3, setting of energy per resource element (EPRE) for the SSB is supported, EPRE exceeding 50 dBm.

In this operation example, the UE 200 may assume that the SSB is transmitted using a wider beam BM radiated as compared with other signals including the TRS and that other signals including the TRS are transmitted using a narrow beam BM.

Further, the SSB may be transmitted via only some CCs, and, for the QCL source, the SSB may be configured in (associated with) the TRS transmitted via each CC.

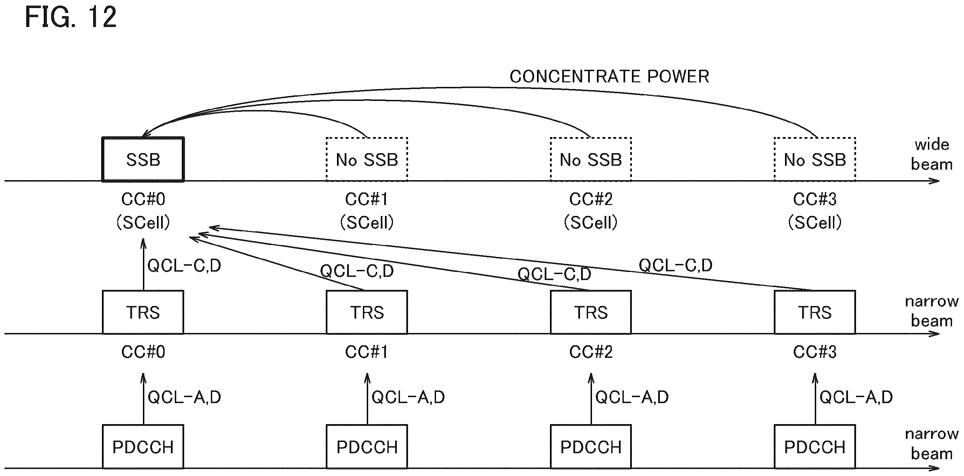

Fig. 12 illustrates an example of QCL between a plurality of CCs according to Operation Example 3. Similarly to Fig. 5, it is also assumed in Fig. 12 that only the SCell is configured and operated in a high frequency band such as FR2x.

As illustrated in Fig. 12, for example, in a case where the SSB is transmitted via only one CC among four CCs (CC#0 to CC#3) in the same band, power (EPRE) may be concentrated on the SSB.

The EPRE can indicate power of one resource element (RE) and can be applied to any channel (for example, a PDSCH, an SSB, and other reference signals). The EPRE does not have to be changed depending on a system bandwidth or the number of resource blocks (RB) .

In a case of FR1 or FR2, the maximum EPRE for the SSB is 50 dBm. However, in this operation example, a maximum of 56 dBm may be set by concentrating power (energy) on a specific SSB as described above.

The EPRE can be set for the UE 200 by an RRC parameter, specifically, ss-PBCH-BlockPower.

The UE 200 does not have to assume reception of a DL signal other than the SSB on an OFDM symbol or slot on which the SSB is transmitted or on which the SSB may be transmitted.

Note that application of such an operation of the UE 200 may be limited to some CCs. For example, the application of such an operation of the UE 200 may be limited to a CC in the same band, a CC used to transmit the SSB, a CC that is not used to transmit the SSB, and the like.

On the other hand, there may be a DL signal (that is, a DL signal of which exceptional reception may be assumed) of which reception is assumed, the DL signal being other than the SSB. Examples of the DL signal can include a periodic TRS and a PDCCH candidate which is an RRC parameter and is indicated by a Type3-PDCCH CSS set related to a Type3-PDCCH common search space (CSS).

### (4) Actions/Effects

According to the above-described embodiment, the following actions and effects can be obtained. Specifically, in a case of the different frequency band including a high frequency band such as FR2x, the UE 200 does not have to assume a quasi-colocation (QCL) relationship between the SSB and the TRS.

Therefore, only the SCell is configured in the high frequency band as described above, and when the SSB is not transmitted, the QCL relationship with the SSB is not assumed, and thus it is possible to prevent degeneration of cell coverage due to an insufficient number of SSBs.

That is, the UE 200 can assume beam operation that enables realization of sufficient cell coverage even in a case of using the different frequency band such as a high frequency band beyond 52.6 GHz.

In the present embodiment, the UE 200 can assume a QCL relationship between the TRS received together with the SSB and another TRS based on the another TRS received via a CC different from the CC used to receive the SSB (and the TRS). Therefore, even in a case where only the SCell is configured in the high frequency band and the SSB is not transmitted, it is possible to assume beam operation that enables realization of sufficient cell coverage.

In the present embodiment, the UE 200 can assume a QCL relationship only for the SCell using a high frequency band such as FR2x. Therefore, it is possible to assume beam operation that enables realization of sufficient cell coverage while limiting application of the assumption of the QCL relationship to a specific case such as the SCell using a high frequency band in which the SSB is not transmitted.

In the present embodiment, the UE 200 can assume more than 64 SSBs in a high frequency band such as FR2x, and can receive the SSB transmitted via only some CCs. Therefore, the UE 200 can assume beam operation that can cope with a wide bandwidth in the high frequency band while suppressing the number of required SSBs.

Further, in a case where more than 64 SSBs are assumed as described above, the UE 200 can receive DCI including information indicating a reference signal (CSI-RS) resource for estimation of channel state information used for determining a random access channel (PRACH) occasion (RO). Therefore, the UE 200 can easily assume reception of the PRACH transmitted with a narrow beam BM by using the information indicating the CSI-RS resource, and can assume beam operation that enables realization of sufficient cell coverage.

In the present embodiment, in a case where the SSB is transmitted via only some CCs using a high frequency band such as FR2x, the UE 200 can assume transmission of the SSB with energy per resource element (EPRE) higher than EPRE in a case of using FR1 and FR2.

That is, the UE 200 can assume that power (energy) is concentrated on a specific SSB, and can improve reception quality of the SSB. As a result, it is possible to contribute to realization of sufficient cell coverage even in a case of the high frequency band.

### (5) Other Embodiments

Hereinabove, although the embodiment has been described, the present invention is not limited to the description of the embodiment, and it is obvious to those skilled in the art that various modifications and improvements can be made.

For example, in the above-described embodiment, use of a high frequency band such as FR2x is assumed, but at least one of the operation examples described above may be applied to another frequency range, for example, a frequency band between FR1 and FR2.

Furthermore, FR2x may be divided into a frequency range of 70 GHz or less and a frequency range of 70 GHz or more, and any one of the operation examples described above may be partially applied to the frequency range of 70 GHz or more and the frequency range of 70 GHz or less.

Moreover, the block diagram (Fig. 4) used for describing the embodiments illustrates blocks of functional unit. Those functional blocks (structural components) are realized by a desired combination of at least one of hardware and software. A method for realizing each functional block is not particularly limited. That is, each functional block may be realized by one device combined physically or logically. Alternatively, two or more devices separated physically or logically may be directly or indirectly connected (for example, wired or wireless) to each other, and each functional block may be realized by these plural devices. The functional blocks may be realized by combining software with the one device or the plural devices described above.

Functions include determining, judging, calculating, computing, processing, deriving, investigating, searching, ascertaining, receiving, transmitting, outputting, accessing, resolving, selecting, choosing, establishing, comparing, assuming, expecting, considering, broadcasting, notifying, communicating, forwarding, configuring, reconfiguring, allocating (mapping), assigning, and the like. However, the functions are not limited thereto. For example, a functional block (structural component) that causes transmitting is called a transmitting unit or a transmitter. For any of the above, as described above, the realization method is not particularly limited to any one method.

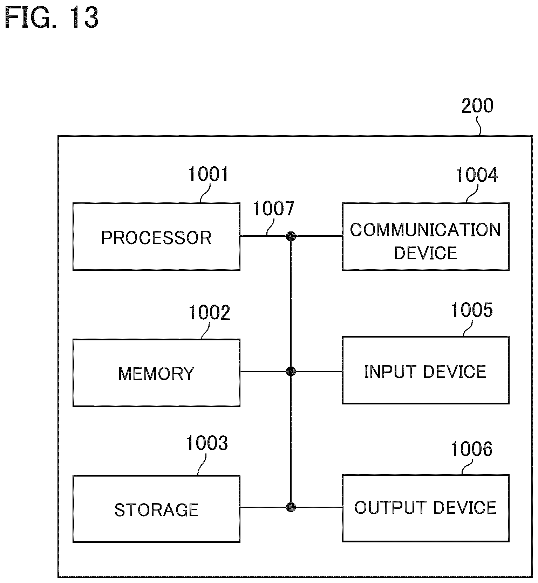

Furthermore, the UE 200 described above may function as a computer that performs the processing of the radio communication method of the present disclosure. Fig. 13 is a diagram illustrating an example of a hardware configuration of the UE 200. As illustrated in Fig. 13, the UE 200 can be configured as a computer device including a processor 1001, a memory 1002, a storage 1003, a communication device 1004, an input device 1005, an output device 1006, a bus 1007, and the like.

Furthermore, in the following description, the term "device" can be replaced with a term such as "circuit", "device", or "unit". A hardware configuration of the device may be constituted by including one or plurality of the devices illustrated in the figure, or may be constituted without including some of the devices.

Each functional block (see Fig. 4) of the UE 200 is realized by any of hardware elements of the computer device or a desired combination of the hardware elements.

Moreover, the processor 1001 performs operation by loading predetermined software (program) on hardware such as the processor 1001 and the memory 1002, controls communication via the communication device 1004, and controls reading and/or writing of data on the memory 1002 and the storage 1003, thereby realizing various functions of the UE 200.

The processor 1001, for example, operates an operating system to control the entire computer. The processor 1001 may be configured with a central processing unit (CPU) including an interface with a peripheral device, a control device, an operation device, a register, and the like.

Moreover, the processor 1001 reads a program (program code), a software module, data, and the like from the storage 1003 and/or the communication device 1004 into the memory 1002, and performs various types of processing according to the data. As the program, a program that is capable of executing on the computer at least a part of the operation described in the above embodiments is used. Alternatively, various types of processing described above may be performed by one processor 1001 or may be performed simultaneously or sequentially by two or more processors 1001. The processor 1001 may be implemented by using one or more chips. Alternatively, the program may be transmitted from a network via a telecommunication line.

The memory 1002 is a computer readable recording medium and may be configured, for example, with at least one of Read Only Memory (ROM), Erasable Programmable ROM (EPROM), Electrically Erasable Programmable ROM (EEPROM), Random Access Memory (RAM), and the like. The memory 1002 may be called register, cache, main memory (main storage device), and the like. The memory 1002 can store therein a program (program codes), software modules, and the like that can execute the method according to the embodiment of the present disclosure.

The storage 1003 is a computer readable recording medium. Examples of the storage 1003 include an optical disk such as Compact Disc ROM (CD-ROM), a hard disk drive, a flexible disk, a magneto-optical disk (for example, a compact disk, a digital versatile disk, or a Blu-ray (Registered Trademark) disk), a smart card, a flash memory (for example, a card, a stick, or a key drive), a floppy (Registered Trademark) disk, a magnetic strip, and the like. The storage 1003 may be called an auxiliary storage device. The recording medium may be, for example, a database including the memory 1002 and/or the storage 1003, a server, or other appropriate media.

The communication device 1004 is hardware (transmission/reception device) capable of performing communication between computers via a wired and/or wireless network. The communication device 1004 is also called, for example, a network device, a network controller, a network card, a communication module, or the like.

The communication device 1004 may include a radio-frequency switch, a duplexer, a filter, a frequency synthesizer, and the like in order to realize, for example, at least one of Frequency Division Duplex (FDD) and Time Division Duplex (TDD).

The input device 1005 is an input device (for example, a keyboard, a mouse, a microphone, a switch, a button, a sensor, and the like) that accepts input from the outside. The output device 1006 is an output device (for example, a display, a speaker, an LED lamp, and the like) that outputs data to the outside. Note that, the input device 1005 and the output device 1006 may be integrated (for example, a touch screen).

In addition, the respective devices, such as the processor 1001 and the memory 1002, are connected to each other with the bus 1007 for communicating information thereamong. The bus 1007 may be constituted by a single bus or may be constituted by separate buses between the devices.

Further, the device may be configured to include hardware such as a microprocessor, a Digital Signal Processor (DSP), an Application Specific Integrated Circuit (ASIC), a Programmable Logic Device (PLD), and a Field Programmable Gate Array (FPGA). Some or all of these functional blocks may be realized by the hardware. For example, the processor 1001 may be implemented by using at least one of these types of hardware.

Notification of information is not limited to that described in the aspect/embodiment described in the present disclosure, and may be performed by using a different method. For example, the notification of information may be performed by physical layer signaling (for example, Downlink Control Information (DCI), Uplink Control Information (UCI), higher layer signaling (for example, RRC signaling, Medium Access Control (MAC) signaling, broadcast information (Master Information Block (MIB) and System Information Block (SIB)), other signals, or a combination thereof. The RRC signaling may be called RRC message, and may be, for example, an RRC Connection Setup message or an RRC Connection Reconfiguration message.

Each of the aspects/embodiments described in the present disclosure may be applied to at least one of Long Term Evolution (LTE), LTE-Advanced (LTE-A), SUPER 3G, IMT-Advanced, 4th generation mobile communication system (4G), 5th generation mobile communication system (5G), Future Radio Access (FRA), New Radio (NR), W-CDMA (Registered Trademark), GSM (Registered Trademark), CDMA2000, Ultra Mobile Broadband (UMB), IEEE 802.11 (Wi-Fi (Registered Trademark)), IEEE 802.16 (WiMAX (Registered Trademark)), IEEE 802.20, Ultra-WideBand (UWB), Bluetooth (Registered Trademark), a system using any other appropriate system, and a next-generation system that is expanded based on these. Further, a plurality of systems may be combined (for example, a combination of at least one of the LTE and the LTE-A with the 5G).

As long as there is no inconsistency, the order of processing procedures, sequences, flowcharts, and the like of each of the above aspects/embodiments in the present disclosure may be exchanged. For example, the various steps and the sequence of the steps of the methods described in the present disclosure are exemplary and are not limited to the specific order described above.

The specific operation that is performed by the base station in the present disclosure may be performed by its upper node in some cases. In a network constituted by one or more network nodes having a base station, the various operations performed for communication with the terminal can be performed by at least one of the base station and other network nodes other than the base station (for example, MME, S-GW, and the like may be considered, but not limited thereto). In the above, an example in which there is one network node other than the base station is described; however, a combination of a plurality of other network nodes (for example, MME and S-GW) may be used.

Information and signals (information and the like) can be output from a higher layer (or lower layer) to a lower layer (or higher layer). It may be input and output via a plurality of network nodes.

The input/output information may be stored in a specific location (for example, a memory) or may be managed in a management table. The information to be input/output can be overwritten, updated, or added. The information may be deleted after outputting. The inputted information may be transmitted to another device.

The determination may be made by a value (0 or 1) represented by one bit or by a Boolean value (Boolean: true or false), or by comparison of numerical values (for example, comparison with a predetermined value).

Each aspect/embodiment described in the present disclosure may be used separately or in combination, or may be switched in accordance with the execution. In addition, notification of predetermined information (for example, notification of "being X") is not limited to being performed explicitly, and it may be performed implicitly (for example, without notifying the predetermined information).

Instead of being referred to as software, firmware, middleware, microcode, hardware description language, or some other names, software should be interpreted broadly to mean instruction, instruction set, code, code segment, program code, program, subprogram, software module, application, software application, software package, routine, subroutine, object, executable file, execution thread, procedure, function, and the like.

Further, software, instruction, information, and the like may be transmitted and received via a transmission medium. For example, when software is transmitted from a website, a server, or some other remote sources by using at least one of a wired technology (coaxial cable, optical fiber cable, twisted pair, Digital Subscriber Line (DSL), or the like) and a wireless technology (infrared light, microwave, or the like), at least one of these wired and wireless technologies is included within the definition of the transmission medium.

Information, signals, or the like described in the present disclosure may be represented by using any of a variety of different technologies. For example, data, instruction, command, information, signal, bit, symbol, chip, or the like that may be mentioned throughout the above description may be represented by voltage, current, electromagnetic wave, magnetic field or magnetic particle, optical field or photons, or a desired combination thereof.

It should be noted that the terms described in the present disclosure and terms necessary for understanding the present disclosure may be replaced by terms having the same or similar meanings. For example, at least one of a channel and a symbol may be a signal (signaling). Also, a signal may be a message. Further, a component carrier (CC) may be referred to as a carrier frequency, a cell, a frequency carrier, or the like.

The terms "system" and "network" used in the present disclosure are used interchangeably.

Furthermore, the information, the parameter, and the like described in the present disclosure may be represented by an absolute value, may be expressed as a relative value from a predetermined value, or may be represented by corresponding other information. For example, the radio resource may be indicated by an index.

The name used for the above parameter is not a restrictive name in any respect. In addition, formulas and the like using these parameters may be different from those explicitly disclosed in the present disclosure. Because the various channels (for example, PUCCH, PDCCH, or the like) and information elements can be identified by any suitable name, the various names assigned to these various channels and information elements shall not be restricted in any way.

In the present disclosure, it is assumed that "base station (BS)", "radio base station", "fixed station", "NodeB", "eNodeB (eNB)", "gNodeB (gNB)", "access point", "transmission point", "reception point", "transmission/reception point", "cell", "sector", "cell group", "carrier", "component carrier", and the like can be used interchangeably. The base station may also be referred to with the terms such as a macro cell, a small cell, a femtocell, or a pico cell.

The base station can accommodate one or more (for example, three) cells (also called sectors). In a configuration in which the base station accommodates a plurality of cells, the entire coverage area of the base station can be divided into a plurality of smaller areas. In each such a smaller area, a communication service can be provided by a base station subsystem (for example, a small base station for indoor use (Remote Radio Head: RRH)).

The term "cell" or "sector" refers to a part or all of the coverage area of a base station and/or a base station subsystem that performs the communication service in this coverage.

In the present disclosure, the terms "mobile station (MS)", "user terminal", "user equipment (UE)", "terminal" and the like can be used interchangeably.

The mobile station may be called by those skilled in the art as a subscriber station, a mobile unit, a subscriber unit, a radio unit, a remote unit, a mobile device, a radio device, a radio communication device, a remote device, a mobile subscriber station, an access terminal, a mobile terminal, a radio terminal, a remote terminal, a handset, a user agent, a mobile client, a client, or with some other suitable terms.

At least one of a base station and a mobile station may be called a transmitting device, a receiving device, a communication device, or the like. Note that, at least one of a base station and a mobile station may be a device mounted on a moving body, a moving body itself, or the like. The moving body may be a vehicle (for example, a car, an airplane, or the like), a moving body that moves unmanned (for example, a drone, an automatically driven vehicle, or the like), or a robot (manned type or unmanned type). At least one of a base station and a mobile station can be a device that does not necessarily move during the communication operation. For example, at least one of a base station and a mobile station may be an Internet of Things (IoT) device such as a sensor.

Also, a base station in the present disclosure may be read as a mobile station (user terminal, hereinafter, the same applies). For example, each of the aspects/embodiments of the present disclosure may be applied to a configuration that allows communication between a base station and a mobile station to be replaced with communication between a plurality of mobile stations (which may be referred to as, for example, Device-to-Device (D2D), Vehicle-to-Everything (V2X), or the like). In this case, the mobile station may have the function of the base station. Words such as "uplink" and "downlink" may also be replaced with wording corresponding to inter-terminal communication (for example, "side"). For example, terms such as an uplink channel, a downlink channel, or the like may be read as a side channel.

Likewise, a mobile station in the present disclosure may be read as a base station. In this case, the base station may have the function of the mobile station.

A radio frame may be configured with one or more frames in time domain. Each of one or more frames in the time domain may also be referred to as a subframe. The subframe may be configured with one or more slots in the time domain. The subframe may be a fixed time length (for example, 1 ms) that does not depend on numerology.

The numerology may be a communication parameter applied to at least one of transmission or reception of a certain signal or channel. The numerology may represent, for example, at least one of a subcarrier spacing (SCS), a bandwidth, a symbol length, a cyclic prefix length, a Transmission Time Interval (TTI), the number of symbols per TTI, a radio frame configuration, specific filtering processing performed by a transceiver in frequency domain, or specific windowing processing performed by the transceiver in the time domain.

The slot may be configured with one or more symbols (Orthogonal Frequency Division Multiplexing (OFDM) symbols, Single Carrier Frequency Division Multiple Access (SC-FDMA) symbols, and the like) in the time domain. The slot may be a unit of time based on the numerology.

The slot may include a plurality of minislots. Each minislot may be configured with one or more symbols in the time domain. Further, the minislot may also be called a subslot. The minislot may be configured with fewer symbols than those of slots. A PDSCH (or PUSCH) transmitted in a time unit larger than the minislot may be called a PDSCH (or PUSCH) mapping type A. A PDSCH (or PUSCH) transmitted using the minislot may be called a PDSCH (or PUSCH) mapping type B.

Each of the radio frame, subframe, slot, minislot, and symbol represents a time unit for transmitting a signal. Different names may be used for the radio frame, subframe, slot, minislot, and symbol, respectively.

For example, one subframe may be called a transmission time interval (TTI), a plurality of consecutive subframes may be called a TTI, and one slot or one minislot may be called a TTI. That is, at least one of the subframe or the TTI may be a subframe (1 ms) in the existing LTE, a period shorter than 1 ms (for example, 1 to 13 symbols), or a period longer than 1 ms. Note that a unit representing the TTI may also be called a slot, a minislot, or the like, instead of a subframe.

Here, the TTI refers to a minimum time unit of scheduling in radio communication, for example. For example, in the LTE system, a base station performs scheduling to allocate radio resources (frequency bandwidth, transmission power, or the like that can be used in each user terminal) to each user terminal in units of TTI. Note that the definition of the TTI is not limited thereto.

The TTI may be a transmission time unit such as a channel-coded data packet (transport block), a code block, or a codeword, or may be a processing unit such as scheduling or link adaptation. Note that, when a TTI is given, a time interval (for example, the number of symbols) in which a transport block, a code block, a codeword, or the like is actually mapped may be shorter than the TTI.

Note that, in a case where one slot or one minislot is called a TTI, one or more TTIs (that is, one or more slots or one or more minislots) may be a minimum time unit of scheduling. Further, the number of slots (the number of minislots) constituting the minimum time unit of the scheduling may be controlled.

A TTI having a time length of 1 ms may be called an ordinary TTI (TTI in LTE Rel. 8 to 12), a normal TTI, a long TTI, an ordinary subframe, a normal subframe, a long subframe, a slot, or the like. A TTI shorter than the ordinary TTI may be called a shortened TTI, a short TTI, a partial or fractional TTI, a shortened subframe, a short subframe, a minislot, a subslot, a slot, or the like.

Note that the long TTI (for example, the ordinary TTI or the subframe) may be read as a TTI having a time length exceeding 1 ms, and the short TTI (for example, the shortened TTI) may be read as a TTI having a TTI length of less than the TTI length of the long TTI and equal to or more than 1 ms.

The resource block (RB) is a resource allocation unit in the time domain and the frequency domain, and may include one or a plurality of consecutive subcarriers in the frequency domain. The number of subcarriers included in the RB may be the same regardless of the numerology, for example, twelve. The number of subcarriers included in the RB may be determined based on the numerology.

Further, the time domain of the RB may include one or a plurality of symbols, and may have a length of one slot, one minislot, one subframe, or one TTI. One TTI, one subframe, or the like may be configured with one or a plurality of resource blocks.

Note that one or a plurality of RBs may also be called physical resource blocks (PRB), subcarrier groups (SCG), resource element groups (REG), PRB pairs, RB pairs, or the like.

Further, the resource block may also be configured with one or a plurality of resource elements (RE). For example, one RE may be a radio resource region of one subcarrier and one symbol.

The bandwidth part (BWP) (which may also be called a partial bandwidth, or the like) may represent a certain subset of continuous common resource blocks (RBs) for the numerology in a certain carrier. Here, the common RB may be specified by an RB index based on a common reference point of the carrier. The PRB may be defined in a certain BWP and numbered within the BWP.

The BWP may include a BWP (UL BWP) for UL and a BWP (DL BWP) for DL. One or a plurality of BWPs may be configured in one carrier for a UE.

At least one of the configured BWPs may be active, and the UE does not have to expect to transmit and receive a predetermined signal/channel outside the active BWP. Note that "cell", "carrier", and the like in the present disclosure may be read as "BWP".

The above-described structures such as a radio frame, a subframe, a slot, a minislot, and a symbol are merely examples. For example, the configuration such as the number of subframes included in a radio frame, the number of slots per subframe or radio frame, the number of minislots included in a slot, the number of symbols and RBs included in a slot or minislot, the number of subcarriers included in an RB, the number of symbols in a TTI, a symbol length, and a cyclic prefix (CP) length can be variously changed.

The terms "connected", "coupled", or any variations thereof, mean any direct or indirect connection or coupling between two or more elements. Also, one or more intermediate elements may be present between two elements that are "connected" or "coupled" to each other. The coupling or connection between the elements may be physical, logical, or a combination thereof. For example, "connection" may be read as "access". In the present disclosure, two elements can be "connected" or "coupled" to each other by using one or more wires, cables, printed electrical connections, and as some non-limiting and non-exhaustive examples, by using electromagnetic energy having wavelengths in the radio frequency domain, the microwave region, and the light (both visible and invisible) region, and the like.

The reference signal may be abbreviated as RS and may be called pilot according to applicable standards.

As used in the present disclosure, the phrase "based on" does not mean "based only on" unless explicitly stated otherwise. In other words, the phrase "based on" means both "based only on" and "based at least on".

A term "means" in the configuration of each device described above may be replaced with a term such as "unit", "circuit", or "device".

Any reference to an element using a designation such as "first", "second", and the like used in the present disclosure generally does not limit the amount or order of those elements. Such designations can be used in the present disclosure as a convenient way to distinguish between two or more elements. Thus, the reference to the first and second elements does not imply that only two elements can be adopted, or that the first element must precede the second element in any other manner.

In the present disclosure, the used terms "include", "including", and variants thereof are intended to be inclusive in a manner similar to the term "comprising". Furthermore, the term "or" used in the present disclosure is intended not to be an exclusive disjunction.

Throughout the present disclosure, for example, during translation, if articles such as "a", "an", and "the" in English are added, in the present disclosure, these articles may include a plurality of nouns following these articles.

The term "determining" used in the present disclosure may encompass a wide variety of operations. The term "determining" can include, for example, judging, calculating, computing, processing, deriving, investigating, looking up, search, inquiry (for example, searching in a table, database, or other data structure), and ascertaining. In addition, "determining" can include receiving (for example, receiving information), transmitting (for example, transmitting information), inputting, outputting, and accessing (for example, accessing data in a memory), and the like. In addition, "determining" can include "resolving", "selecting", "choosing", "establishing", "comparing", and the like. In other words, the term "determining" can include any operation. Further, the term "determining" may also be read as "assuming", "expecting", "considering", and the like.

In the present disclosure, the term "A and B are different" may mean "A and B are different from each other". It should be noted that the term may mean "A and B are each different from C". Terms such as "leave", "coupled", or the like may also be interpreted in the same manner as "different".

Although the present disclosure has been described in detail above, it will be obvious to those skilled in the art that the present disclosure is not limited to the embodiments described in the present disclosure. The present disclosure can be implemented as modifications and variations without departing from the spirit and scope of the present disclosure as defined by the claims. Therefore, the description of the present disclosure is for the purpose of illustration, and does not have any restrictive meaning to the present disclosure.

### Reference Signs List

10 Radio communication system
20 NG-RAN
100A, 100B gNB
UE 200
210 Radio signal transmitting and receiving unit
220 Amplifying unit
230 Modulation and demodulation unit
240 Control signal/reference signal processing unit
250 Coding/decoding unit
260 Data transmitting and receiving unit
270 Control unit
BM Beam
1001 Processor
1002 Memory
1003 Storage
1004 Communication device
1005 Input device
1006Output device
1007 Bus

## Claims

1. A terminal comprising:
a receiving unit that receives at least one of a synchronization signal block or a tracking reference signal via a component carrier transmitted from a network; and
a control unit that does not assume a quasi-colocation relationship between the synchronization signal block and the tracking reference signal in a case of using a different frequency band that is different from a frequency band including one or a plurality of frequency ranges.

2. The terminal according to claim 1, wherein the control unit assumes, based on another tracking reference signal received via a predetermined component carrier, a quasi-colocation relationship between the tracking reference signal and the another tracking reference signal.

3. The terminal according to claim 1 or 2, wherein the receiving unit receives downlink control information including information indicating a reference signal resource for estimation of channel state information used for determining a random access channel occasion.

4. A terminal comprising:
a receiving unit that receives a synchronization signal block from a network; and
a control unit that assumes, in a case of using a different frequency band that is different from a frequency band including one or a plurality frequency ranges, a larger number of the synchronization signal blocks as compared with a case of using the frequency band,
wherein the receiving unit receives the synchronization signal block transmitted via only some component carriers in the different frequency band.

5. A terminal comprising:
a receiving unit that receives a synchronization signal block from a network; and
a control unit that assumes, in a case where the synchronization signal block is transmitted via only some component carriers in a different frequency band that is different from a frequency band including one or a plurality of frequency ranges, transmission of the synchronization signal block with power higher than maximum power in a case of using the frequency band.

6. The terminal according to any one of claims 1 to 5, wherein the control unit assumes the quasi-colocation relationship for a secondary cell using the different frequency band.
